# EUROPÄISCHE PATENTANMELDUNG

(11) **EP 3 834 612 A1**
(43) Veröffentlichungstag der Anmeldung: **16.06.2021**
(21) Anmeldenummer: 20401064.9
(22) Anmeldetag: 03.12.2020
(51) Int. Cl.: A01M 7/00

(54) **VORRICHTUNG UND VERFAHREN ZUR AUSBRINGUNG VON SPRITZFLÜSSIGKEIT AUF EINER LANDWIRTSCHAFTLICHEN FLÄCHE**

(30) Priorität: 13.12.2019 DE 102019134254
(71) Anmelder: Amazonen-Werke H. Dreyer SE & Co. KG, 49205 Hasbergen (DE)
(72) Erfinder: Homann, Maximilian, 33142 Brenken (DE)

(57) **Zusammenfassung**

Spritzvorrichtung, insbesondere landwirtschaftliche Feldspritze, zur Ausbringung von Wirkstoff enthaltender Spritzflüssigkeit auf einer landwirtschaftlichen Fläche (N), umfassend zumindest ein Gestänge (100), das vorzugsweise aus mehreren gelenkig miteinander verbundenen Abschnitten (102a-102g) ausgebildet ist, mehrere an dem Gestänge (100) angeordnete Düsenhalter (10), wobei ein Düsenhalter (10) zumindest eine Düse umfasst, und zumindest eine Steuereinheit die dazu eingerichtet ist, die Düsenhalter (10) in Abhängigkeit einer Geschwindigkeit und/oder Drehrate und/oder einer einstellbaren Sollausbringrate derartig zu aktivieren und/oder anzusteuern, dass jeder Düsenhalter (10), insbesondere Düse, entlang des Gestänges (100) eine Ausbringrate der Spritzflüssigkeit aufweist, deren Abweichung zur Sollausbringrate minimal, vorzugsweise Null, ist. Um die Ausbringung von Spritzflüssigkeit mit einer Spritzvorrichtung zu verbessern, ist vorgesehen, dass die Düsenhalter (10), insbesondere bei Kurvenfahrt, in Abhängigkeit zumindest eines Parameters, vorzugsweise variablen, Teilbreiten zuordenbar sind.

## Beschreibung

Die Erfindung betrifft eine Spritzvorrichtung, insbesondere landwirtschaftliche Feldspritze, gemäß dem Oberbegriff des Patentanspruches 1 und ein Verfahren zum Betreiben einer Spritzvorrichtung gemäß dem Oberbegriff des Patentanspruches 11.

In einer Vielzahl von Anwendungsfällen, insbesondere in der Landwirtschaft, werden Spritzvorrichtungen, insbesondere Feldspritzen, zum Ausbringen von Wirkstoff enthaltender Spritzflüssigkeit auf einer landwirtschaftlichen Fläche eingesetzt. Gattungsgemäße Spritzvorrichtungen, insbesondere landwirtschaftliche Feldspritzen, umfassen hierbei zumindest einen Vorratsbehälter von dem aus die Spritzflüssigkeit über zumindest eine Versorgungsleitung und diesen nachgeordnete Düsenhalter, insbesondere Düsen, auf der landwirtschaftlichen Fläche ausbringbar ist. Typischerweise ist zumindest ein Teil der Versorgungsleitungen und/oder die Düsenhalter, insbesondere Düsen, an einem aus mehreren Abschnitten, vorzugsweise im Wesentlichen quer zu einer Fahrtrichtung, ausgebildeten Gestänge angeordnet. Insbesondere während des Ausbringens der Spritzflüssigkeit ist die Einstellung einer bedarfsgerechten Ausbringrate von außerordentlicher Wichtigkeit, um einerseits gute Ausbringergebnisse und andererseits gute Ertragssteigerungen zu erzielen.

Neben unterschiedlicher Parameter, die von der Spritzvorrichtung abhängig sind, sind insbesondere die Beschaffenheit der landwirtschaftlichen Fläche und/oder deren Pflanzenbestand für die Ausbringrate der Spritzflüssigkeit von entscheidender Bedeutung. Um eine große Variabilität der Ausbringrate ausgehend von den Düsenhaltern, insbesondere Düsen, über der landwirtschaftlichen Fläche zu erreichen, haben sich bei modernen Spritzvorrichtungen als Mehrfachdüsenkörper ausgebildete Düsenhalter, insbesondere Düsen, und/oder pulsweitenmodulierte Ventile, die den Düsenhaltern, insbesondere Düsen, zugeordnet sind durchgesetzt. Als Mehrfachdüsenkörper ausgebildete Düsenhalter, insbesondere Düsen, können dabei neben einer einzige Düse außerdem mehrere Düsen, mit vorzugsweise jeweils unterschiedlichen Sprüheigenschaften, aufweisen. Je nach Bedarf, insbesondere einer vorgegebenen Sollausbringrate, ist die Ausbringmenge, insbesondere Ausbringrate, durch das Ansteuern und/oder Aktivieren einer einzelnen Düse und/oder, vorzugsweise einer Kombination, mehrerer Düsen zumindest eines Düsenhalters anpassbar. Ferner ist es üblich eine an die einzelnen Abschnitte des Gestänges angelehnte Zuordnung der Düsenhalter, insbesondere Düsen, zu realisieren. Hierbei weisen die innerhalb eines Abschnittes angeordneten Düsenhalter nahezu die gleichen Ausbringraten auf. Bei einer so genannten Teilbreitenschaltung sind die Düsenhalter, insbesondere Düsen, zumindest einer Teilbreite, vorzugsweise gemeinsam, auf eine bestimmte Ausbringrate einstellbar und/oder abschaltbar und/oder aktivierbar.

Darüber hinaus werden neben Einstoffdüsen, die ausschließlich mit der ausbringbaren Spritzflüssigkeit versorgbar sind, auch Mehrstoffdüsen, insbesondere Zweistoffdüsen, eingesetzt. Eine Mehrstoffdüse ist dabei mit zumindest einer weiteren Spritzflüssigkeit und/oder mit zumindest einem kompressiblem Fluid, insbesondere Druckluft, versorgbar und somit variabler einsetzbar als eine Einstoffdüse.

Eine derartige Spritzvorrichtung ist in der US 9 339 023 B2 beschrieben. Die Spritzvorrichtung umfasst zumindest ein Gestänge, das vorzugsweise aus mehreren gelenkig miteinander verbundenen Abschnitten ausgebildet ist, und mehrere an dem Gestänge angeordnete Düsenhalter. Die Düsenhalter umfassen hierbei zumindest eine Düse, mittels derer eine Wirkstoff enthaltene Spritzflüssigkeit auf einer landwirtschaftlichen Fläche ausbringbar ist. Darüber hinaus umfasst die Spritzvorrichtung zumindest eine Steuereinheit die dazu eingerichtet ist, die Düsenhalter in Abhängigkeit einer Geschwindigkeit und/oder Drehrate und/oder einer einstellbaren Sollausbringrate zu aktivieren und/oder anzusteuern. Die Ausbringrate eines Düsenhalters, insbesondere einer Düse, ist von der zumindest einen Steuereinheit derart regelbar, dass die Abweichung der Ausbringrate zur Sollausbringrate minimal, vorzugsweise Null, ist.

Nachteilig an diesem Aufbau ist unter anderem, dass die Düsenhalter, insbesondere Düsen, primär anhand der Beschaffenheit der landwirtschaftlichen Fläche und/oder deren Pflanzenbestand, insbesondere der Position der jeweiligen Düse auf der landwirtschaftlichen Fläche, aktivierbar und/oder ansteuerbar sind. Dabei ist jeweils jeder Düsenhalter, insbesondere Düse, der Spritzvorrichtung mittels einer Steuer- und/oder Regelungsroutine des Steuersystems steuer- und/oder regelbar. Darüber hinaus sind die Düsenhalter, insbesondere Düsen, mehreren, insbesondere festen, Teilbreiten, die insbesondere im Wesentlichen den einzelnen Abschnitten des Gestänges entsprechen, zuordenbar, wobei hieraus eine stark eingeschränkte Flexibilität der Ausbringung resultiert.

Des Weiteren ist das Spektrum der Ausbringmenge stark durch die Anzahl und/oder die Sprüheigenschaften der an den Düsenhalter angeordneten Düsen begrenzt. Dies gilt zum einen für die erreichbare minimale und/oder maximale Ausbringrate und zum anderen auch für die Abstufung der erreichbaren Ausbringraten, insbesondere der applizierten Ausbringmengen, entlang des Gestänges. Somit besteht insbesondere der Nachteil, dass ein Applizieren stark unterschiedlicher Ausbringmengen einen zeitaufwendigen Wechsel der Düsenhalter, insbesondere Düsen, am Gestänge durch einen Bediener erfordert.

Außerdem kann bei einer geringen Anzahl an Düsenhaltern, insbesondere Düsen, nur eine grobe Abstufung der Ausbringmengen, insbesondere zwischen zumindest zwei Teilbreiten, entlang des Gestänges zu einer Unter- und/oder Überdosierung auf der landwirtschaftlichen Fläche und/oder deren Pflanzenbestand führen. Die beschränkte Anzahl an Düsenhaltern, insbesondere Düsen, ist insbesondere während Kurvenfahrten der Spritzvorrichtung nachteilig. Hierbei ist ein Teil des Gestänges zumindest im Wesentlichen dem Kurvenmittelpunkt zugewandt und weist somit eine geringere Umfangsgeschwindigkeit gegenüber dem vom Kurvenmittelpunkt abgewandten Teil auf. Somit ist es erforderlich die Ausbringraten der Düsenhalter, insbesondere Düsen, entlang des Gestänges, insbesondere in Richtung der steigenden Umfangsgeschwindigkeit, zu variieren, insbesondere zu erhöhen. Außerdem ist somit ein breites Spektrum der Ausbringmengen entlang des Gestänges für eine optimale Ausbringung der Spritzflüssigkeit, insbesondere während Kurvenfahrten, von außerordentlicher Wichtigkeit.

Die der Erfindung zugrunde liegende Aufgabe besteht somit darin, eine Spritzvorrichtung, insbesondere landwirtschaftliche Feldspritze, so zu gestalten, dass die oben genannten Nachteile zumindest teilweise gemildert und/oder beseitigt sind.

Diese Aufgabe wird erfindungsgemäß dadurch gelöst, dass die Düsenhalter, insbesondere bei Kurvenfahrt, in Abhängigkeit zumindest eines Parameters, vorzugsweise variablen, Teilbreiten zuordenbar sind.

Infolge dieser Maßnahme ist die auf der landwirtschaftlichen Fläche ausbringbare Menge der Spritzflüssigkeit über eine, vorzugsweise variable, Kombination von Düsenhaltern, insbesondere Düsen, die jeweils einer, vorzugsweise variablen, Teilbreite entlang des Gestänges zugeordnet sind, einstellbar. Hierbei sind Teilbreiten besonders bevorzugt die zumindest zwei Düsenhalter, insbesondere Düsen, umfassen. Die Zuordnung der jeweiligen Düsenhalter, insbesondere Düsen, innerhalb der Teilbreiten ist zeitlich beabstandet, vorzugsweise stetig, innerhalb einer Steuerungs- und/oder Regelungsroutine der Spritzvorrichtung anpassbar. Die zur Zuordnung der Teilbreiten berücksichtigbaren Parameter können hierbei beispielsweise von zumindest einem Sensor erfassbare Zustandsgrößen und/oder Umgebungsinformationen im Bereich der landwirtschaftlichen Fläche sein. Darüber hinaus sind für die Bestimmung der, vorzugsweise variablen, Teilbreiten die Sprüheigenschaften der einzelnen und/oder kombinierten Düsenhalter, insbesondere Düsen, von entscheidender Bedeutung. Diese sind erfindungsgemäß alternativ oder zusätzlich zur Festlegung der Teilbreitengröße und/oder Teilbreitenaufteilung entlang des Gestänges von der Steuerungs- und/oder Regelungseinrichtung berücksichtigbar. Diese Maßnahme erlaubt eine deutlich gesteigerte Flexibilität der Ausbringmengen entlang des Gestänges. Darüber hinaus ist somit erreicht, dass die Abstufung der Ausbringmengen zwischen zumindest zwei Teilbreiten an dem Gestänge, insbesondere Teilflächen auf der landwirtschaftlichen Fläche, besonders fein abstufbar ist.

In einer bevorzugten Ausführungsform der erfindungsgemäßen Spritzvorrichtung sind die Teilbreiten durch zumindest zwei unterschiedliche Geschwindigkeitsintervalle festgelegter Größe definierbar. Hierbei kann die Geschwindigkeit der Spritzvorrichtung und/oder zumindest eines Düsenhalters, insbesondere einer Düse, zur Zuordnung in die jeweilige Teilbreite berücksichtigt werden. Darüber hinaus ist denkbar, eine zusammengefasste, insbesondere gemittelte, Geschwindigkeit mehrerer Düsenhalter, insbesondere Düsen, die zumindest innerhalb eines bestimmten Abschnitts des Gestänges angeordnet sind zu berücksichtigen. Ferner kann hierunter auch eine Umfangs- und/oder Winkelgeschwindigkeit einer während einer Kurvenfahrt beweglichen Spritzvorrichtung und/oder eines Düsenhalters, insbesondere Düse, verstanden werden. Mittels der Größe und/oder Breite der Geschwindigkeitsintervalle ist insbesondere die Empfindlichkeit einer Düsenansteuerung und/oder Düsenaktivierung beeinflussbar. Die Spritzvorrichtung reagiert hierbei beispielsweise bei besonders großen und/oder breiten Geschwindigkeitsintervallen weniger stark mit einer Anpassung der Ausbringrate als bei weniger großen und/oder weniger breiten Geschwindigkeitsintervallen.

In einer Weiterbildung der erfindungsgemäßen Spritzvorrichtung sind die Düsen innerhalb eines Düsenhalters einzeln und/oder in Kombination aktivierbar, und die Düsenhalter, insbesondere Düsen, unter Berücksichtigung zumindest eines benachbarten Düsenhalters, insbesondere Düse, ansteuerbar. Eine der Spritzvorrichtung zugeordnete Steuerungs- und/oder Regelungseinrichtung ist hierbei dazu eingerichtet, die Sprüheigenschaften zumindest zweier benachbarter Düsenhalter, insbesondere Düsen, zu berücksichtigen, insbesondere zu vergleichen, und/oder die Düsenhalter, insbesondere Düsen, den, vorzugsweise variablen, Teilbreiten zuzuordnen. Die Spritzflüssigkeit ist somit mittels der innerhalb einer Teilbreite einordenbaren Düsenhalter, insbesondere Düsen, mit einer an die Sollausbringrate, insbesondere Sollausbringmenge, angepassten Ausbringrate ausbringbar. Darüber hinaus ist die Steuerungs- und/oder Regelungseinrichtung dazu eingerichtet, zu überprüfen und/oder zu vergleichen mit welcher Auswahl von aktivierbaren Düsenhaltern, insbesondere Düsen, eine Ausbringmenge erreichbar ist, die im Wesentlichen der Sollausbringrate, insbesondere Sollausbringmenge, entspricht. Ferner kann es hierbei sinnvoll sein, nicht direkt miteinander benachbarte Düsenhalter, insbesondere Düsen, miteinander zu kombinieren und/oder zu aktivieren. Somit kann beispielsweise während eines Ausbringvorgangs zwischen zwei aktivierbaren Düsenhaltern, insbesondere Düsen, zumindest ein nicht aktivierter Düsenhalter, insbesondere Düse, angeordnet sein, so dass während eines Ausbringvorgangs ein größerer Abstand zwischen zwei ausbringbaren Düsenhaltern, insbesondere Düsen, erreichbar ist. Hierbei wird beispielweise ein zwischen zwei Düsenhaltern, insbesondere Düsen, angeordneter weiterer Düsenhalter, insbesondere Düse, innerhalb der Steuerungs- und/oder Regelungsroutine während eines bestimmten Ausbringvorgangs nicht angesteuert und/oder aktiviert. Somit ist eine stark verbesserte, insbesondere gleichmäßigere, Applizierung der Spritzflüssigkeit auf der landwirtschaftlichen Fläche und/oder deren Pflanzenbestand erreicht, bei der neben dem Einfluss eines aktivierbaren Düsenhalters, insbesondere einer Düse, außerdem der Einfluss zumindest eines benachbarten Düsenhalters, insbesondere Düse, berücksichtigbar ist.

In einer anderen bevorzugten Ausführungsform der erfindungsgemäßen Spritzvorrichtung sind die Düsen innerhalb eines Düsenhalters einzeln und/oder in Kombination aktivierbar, und die Düsenhalter, insbesondere Düsen, unter Berücksichtigung der Sprüheigenschaften, der zumindest einen Düse innerhalb eines Düsenhalters, ansteuerbar. Somit sind unter anderem die Sprüheigenschaften jeder einzelnen Düse innerhalb eines Düsenhalters wie beispielsweise Ausbringrate und/oder Düsengröße, insbesondere Lochdurchmesser, und/oder Sprühwinkel für die Auswahl der aktivierbaren Düsenhalter und/oder die Festlegung der, vorzugsweise variablen, Teilbreiten berücksichtigbar. Die Sprüheigenschaften der Düsenhalter, insbesondere Düsen, und/oder der jeweiligen Düsen innerhalb eines Düsenhalters sind somit alternativ oder zusätzlich zu den weiteren Parametern, wie beispielsweise Geschwindigkeiten der Spritzvorrichtung und/oder der Düsenhalter, für die Zuordnung in die jeweiligen Teilbreiten entscheidend. Darüber hinaus ist denkbar, eine unterschiedliche Gewichtung zwischen den weiteren Parametern, wie beispielsweise die Geschwindigkeiten, und den Sprüheigenschaften zumindest eines Düsenhalter, insbesondere einer Düse, zu berücksichtigen.

In einer anderen Weiterbildung der erfindungsgemäßen Spritzvorrichtung unterscheiden sich die aktivierten Düsen und/oder die Kombination von aktivierten Düsen innerhalb eines Düsenhalters, insbesondere in ihren Sprüheigenschaften. Besonders vorteilhaft ist die Anordnung von Düsen innerhalb eines Düsenhalters bei der sich zumindest zwei Düsen in zumindest einer Sprüheigenschaft unterscheiden. Alternativ ist auch denkbar, dass die Düsen innerhalb eines Düsenhalters zumindest nahezu die gleichen Sprüheigenschaften aufweisen, wobei sich jedoch die Düsen zumindest zweier benachbarter Düsenhalter zumindest in einer Sprüheigenschaft unterscheiden. Hiermit ist eine besonders große Variabilität der Ausbringraten und/oder der Applikationsmengen mit besonders großem Spektrum zwischen einer minimalen und maximalen Ausbringmenge erreichbar.

In einer weiteren bevorzugten Ausführungsform der erfindungsgemäßen Spritzvorrichtung sind die Düsenhalter, insbesondere Düsen, dazu eingerichtet, die Spritzflüssigkeit in Form zumindest eines Sprühstrahls und/oder Sprühfächers auszubringen, und dass die Sprühstrahlen und/oder Sprühfächer zumindest zweier Düsenhalter, insbesondere in einem Übergangsbereich zwischen zumindest zwei Teilbreiten, sich zumindest teilweise überlappen, wobei die Ausbringrate zumindest zweier sich überlappender Sprühstrahlen und/oder Sprühfächer einer an die Sollausbringrate angepassten Ausbringrate entspricht. Zumindest ein von einem Düsenhalter, insbesondere einer Düse, ausgehender Sprühstrahl und/oder Sprühfächer ist manuell und/oder automatisiert einstellbar, so dass sich zumindest ein Sprühstrahl und/oder Sprühfächer zumindest zweier Düsenhalter, insbesondere Düsen, überlappen. Bei einer besonders vorteilhaften Ausbildung der erfindungsgemäßen Spritzvorrichtung sind die Sprühstrahlen und/oder Sprühfächer zumindest zweier in jeweils unterschiedlichen Teilbreiten zuordenbaren Düsenhalter derartig einstellbar, dass sich die jeweiligen Sprühstrahlen und/oder Sprühfächer zumindest teilweise überlappen. Alternativ oder zusätzlich ist zumindest ein Sprühstrahl und/oder Sprühfächer zumindest zweier Düsen innerhalb eines Düsenhalters soweit anpassbar, dass sich diese zumindest teilweise überlappen. Ferner ist denkbar, dass sich bei zumindest zwei benachbarten Düsenhaltern, insbesondere Düsen, zumindest einer der zumindest zwei in einem ausgeschalteten Zustand verbingbar ist, so dass zumindest ein weiterer Düsenhalter derartig einstellbar ist, dass sich die Sprühstrahlen und/oder Sprühfächer des zumindest einen und des zumindest einen weiteren Düsenhalter, insbesondere Düse, zumindest teilweise überlappen. Zur Einstellung zumindest eines Sprühstrahls und/oder Sprühfächers ist zumindest ein Düsenhalter, insbesondere Düse, derartig ausgebildet, dass die Ausrichtung zumindest eines Düsenaustritts und/oder der Sprühwinkel einstellbar ist. Dies erlaubt eine kombinierte und somit weiter gesteigerte Variabilität der Applikation von Spritzflüssigkeit auf der landwirtschaftlichen Fläche und/oder deren Pflanzenbestand.

In einer weiteren Weiterbildung der erfindungsgemäßen Spritzvorrichtung sind die Düsenhalter den Teilbreiten gruppenweise zuordenbar, wobei die Düsen und/oder die Kombination von Düsen eine Ausbringrate der Spritzflüssigkeit aufweisen, deren Abweichung bei aktueller Bahngeschwindigkeit zur Sollausbringrate minimal, vorzugsweise Null, ist. Eine der Spritzvorrichtung zugeordnete Steuerung- und/oder Regelungseinrichtung ist dazu eingerichtet, zumindest eine Düse und/oder eine Kombination von Düsen zumindest eines, vorzugsweise desselben, Düsenhalters so auszuwählen, dass die Summe der einzelnen Ausbringraten, insbesondere durch die zumindest teilweise Überlappung der ausbringbaren Spritzflüssigkeit, der Sollausbringrate, insbesondere der Sollapplikationsmenge, zumindest nahezu entspricht. Die Ausbringrate und/oder die Form des Sprühstrahls und/oder Sprühfächers zumindest zweier benachbarter Düsenhalter, insbesondere Düsen, kann sich hierbei zumindest teilweise unterscheiden. Eine abweichende Ausbringrate zumindest zweier Düsenhalter ist insbesondere während Kurvenfahrten, während denen die zumindest zwei Düsenhalter, insbesondere Düsen, unterschiedliche Bahngeschwindigkeiten, insbesondere Umfangsgeschwindigkeiten, aufweisen erforderlich. Die Ausbringraten innerhalb der jeweiligen Teilbreiten sind hierbei soweit beeinflussbar, dass die Ausbringrate, insbesondere Ausbringmenge, bei nahezu jeder Bahngeschwindigkeit, insbesondere einer Beschleunigung, der Spritzvorrichtung und/oder zumindest eines Düsenhalters, insbesondere Düse, der Sollausbringrate, insbesondere Sollausbringmenge, entspricht. Dies ist durch ein zeitlich beabstandetes Steuern und/oder Regeln der Ausringraten, insbesondere eines Volumenstroms der Spritzflüssigkeit innerhalb zumindest einer Versorgungsleistung und/oder der Düsenhalter, insbesondere Düsen, Einstellungen, erreichbar, bei der der zeitliche Abstand zwischen zumindest zwei Steuer- und/oder Regelvorgänge der Ausbringrate besonders klein ist. Somit ist eine besonders dynamische Anpassung der jeweiligen Ausbringraten zumindest einer Düse erreichbar.

Darüber hinaus ist eine erfindungsgemäße Spritzvorrichtung bevorzugt bei der die Düsen innerhalb eines Düsenhalters einzeln und/oder in Kombination aktivierbar sind, und dass die Düsenhalter, insbesondere Düsen, vorzugsweise gruppenweise und/oder innerhalb einer variablen Teilbreite, unter Berücksichtigung der Position des zumindest einen Düsenhalters, ansteuerbar sind. Die Spritzvorrichtung umfasst zumindest eine Mittel zur Bestimmung der Position der Spritzvorrichtung, insbesondere zumindest einer Düse, über der landwirtschaftlichen Fläche. Alternativ oder zusätzlich sind die geometrischen Daten der Spritzvorrichtung und/oder der Düsenhalter, insbesondere Düsen, auf einer der Spritzvorrichtung zugeordneten Steuerungs- und/oder Regelungseinrichtung, insbesondere Steuereinheit, hinterlegbar und/oder abrufbar. Somit ist die Position zumindest eines Düsenhalters, insbesondere einer Düse, alternativ oder zusätzlich von der Steuerungs- und/oder Regelungseinrichtung, insbesondere Steuereinheit, berechenbar. Dies hat den entscheidenden Vorteil, dass die erforderliche Messtechnik entlang des Gestänges, zur Bestimmung der Position und/oder Geschwindigkeit zumindest eines Düsenhalters, insbesondere Düse, somit erheblich reduzierbar und besonders kostengünstig realisierbar ist.

In einer anderen bevorzugten Ausführungsform der erfindungsgemäßen Spritzvorrichtung sind die Düsen innerhalb eines Düsenhalters einzeln und/oder in Kombination aktivierbar, und die Düsenhalter, insbesondere Düsen, vorzugsweise gruppenweise und/oder innerhalb einer variablen Teilbreite, unter Berücksichtigung einer Soll-Applikationsmenge die, insbesondere Teilflächenspezifisch, auf einer der Spritzvorrichtung zugeordneten Steuereinheit hinterlegbar und/oder abrufbar ist, ansteuerbar. Hierbei ist eine Applikationskarte, die die vorgegebenen Soll-Applikationsmengen auf der landwirtschaftlichen Fläche umfasst, innerhalb der Spritzvorrichtung zugeordneten Steuerungs- und/oder Regelungseinrichtung, insbesondere Steuereinheit, hinterlegbar. Die Düsenhalter, insbesondere Düsen, sind somit zusätzlich durch die Berücksichtigung der erreichbaren Ausbringmengen einzelner und/oder der Kombination von Düsenhalter, insbesondere Düsen, und der erforderlichen Soll-Applikationsmenge auswählbar und/oder aktivierbar. Somit ist eine Spritzvorrichtung erreicht, mittels der eine, vorzugsweise automatisierte, Zuordnung und/oder Festlegung der Teilbreiten und eine an den Bedarf der landwirtschaftlichen Fläche und/oder deren Pflanzenbestand anpassbare Applizierung der Spritzflüssigkeit realisierbar ist.

Bei einer besonders bevorzugten Ausführungsform der erfindungsgemäßen Spritzvorrichtung sind die Düsen innerhalb eines Düsenhalters einzeln und/oder in Kombination aktivierbar, und die Düsenhalter, insbesondere Düsen, unter Berücksichtigung zumindest eines Fluiddrucks innerhalb des zumindest einen Spritzflüssigkeitskreislaufes ansteuerbar. Die Spritzvorrichtung umfasst zumindest eine Versorgungsleitung durch die zumindest ein Düsenhalter, insbesondere Düse, mit einer innerhalb eines Vorratsbehälters bevorrateten Spritzflüssigkeit versorgbar ist. Die Versorgungsleitung ist dabei derartig ausgebildet, dass zumindest abschnittsweise innerhalb der Spritzvorrichtung ein Spritzflüssigkeitskreislauf realisierbar ist. Die Ausbringraten zumindest zweier in Fluidkommunikation stehender Düsenhalter, insbesondere Düsen, sind somit von einem zumindest nahezu gleichen Fluiddruck abhängig. Der Fluiddruck ist hierbei vorzugsweise mittels zumindest eines Sensors innerhalb des Spritzflüssigkeitskreislaufs bestimmbar. Alternativ und/oder zusätzlich ist der Fluiddruck indirekt durch die Erfassung und/oder Vorgabe von zumindest einer weiteren fluidtechnischen Größe, beispielsweise Strömungsgeschwindigkeit und/oder einem Strömungsquerschnitt, berechenbar.

Die der Erfindung zugrunde liegende Aufgabe wird ferner durch ein Verfahren zum Betreiben einer Spritzvorrichtung, insbesondere landwirtschaftliche Feldspritze, gelöst, wobei die Düsenhalter, insbesondere bei Kurvenfahrt, in Abhängigkeit zumindest eines Parameters, vorzugsweise variablen, Teilbreiten zugeordnet werden. Hinsichtlich der Vorteile und Modifikationen des erfindungsgemäßen Verfahrens wird zunächst auf die Vorteile und Modifikationen der erfindungsgemäßen Spritzvorrichtung, insbesondere landwirtschaftlichen Feldspritze, verwiesen.

In einer bevorzugten Ausführungsform des erfindungsgemäßen Verfahrens wird zumindest ein Düsenhalter, insbesondere eine Düse, unter Berücksichtigung zumindest eines Parameters aktiviert und/oder angesteuert. Der Parameter kann hierbei die Bahngeschwindigkeit des Düsenhalters, insbesondere der Düse, sein. Alternativ oder zusätzlich umfasst der Parameter die Sprüheigenschaften der Düsen innerhalb des Düsenhalters. Alternativ oder zusätzlich umfasst der Parameter die Sprüheigenschaften und/oder die Ausbringrate zumindest eines benachbarten Düsenhalters, insbesondere zumindest einer Düse innerhalb des benachbarten Düsenhalters. Die Ausbringrate zumindest eines Düsenhalters, insbesondere einer Düse, kann hierbei vorzugsweise aus mehreren des jeweiligen Düsenhalters, insbesondere Düse, erreichbaren Ausbringraten, insbesondere in Abhängigkeit eines Fluiddrucks, abrufbar sein und/oder unter Berücksichtigung einer für die jeweilige Düse hinterlegten Funktion bestimmbar und/oder berechenbar sein. Alternativ oder zusätzlich umfasst der Parameter die Position des Düsenhalters. Die Position des zumindest einen Düsenhalters, insbesondere Düse, wird hierbei mittels eines Sensors, insbesondere GPS-Empfängers, bestimmt und/oder alternativ unter Berücksichtigung von geometrischen Daten der Spritzvorrichtung berechnet. Alternativ oder zusätzlich umfasst der Parameter die Soll-Applikationsmenge zumindest einer Teilfläche, wobei die Soll- Applikationsmenge auf einer der Spritzvorrichtung zugeordneten Steuereinheit hinterlegt und/oder abrufbar ist. Alternativ oder zusätzlich umfasst der Parameter den Fluiddruck der Spritzflüssigkeit innerhalb eines Spritzflüssigkeitskreislaufes der den Düsenhaltern zugeordnet ist.

Weitere Einzelheiten der Erfindung sind der Beispielsbeschreibung und den Zeichnungen zu entnehmen. Die Zeichnungen zeigen
- Fig.1: eine Ausführungsform der erfindungsgemäßen Spritzvorrichtung bei der Applikation einer Spritzflüssigkeit auf einer landwirtschaftlichen Fläche bei einer Kurvenfahrt in einer schematischen Ansicht; und
- Fig.2: die Spritzvorrichtung aus Fig. 1 bei einer teilflächenspezifischen Applikation von Spritzflüssigkeit in einer schematischen Ansicht.

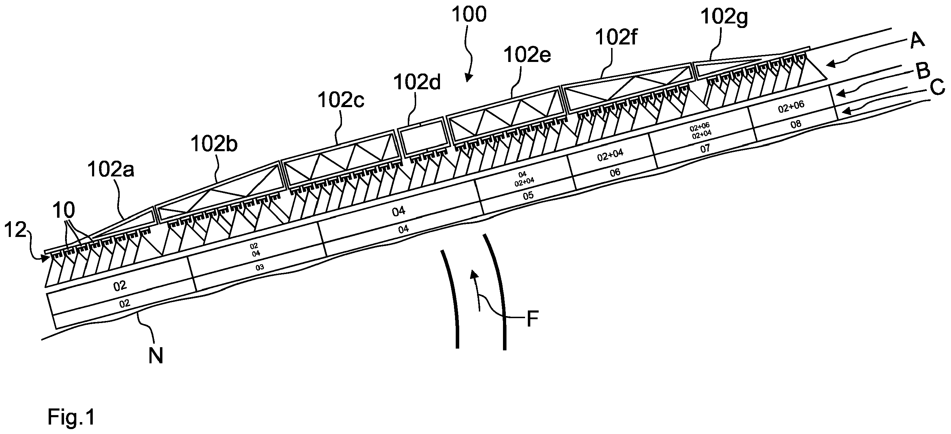

Die Fig. 1 zeigt ein erfindungsgemäßes Gestänge 100 einer landwirtschaftlichen Spritzvorrichtung, welche eine Wirkstoffen enthaltene Spritzflüssigkeit im Wesentlichen quer zu einer Fahrtrichtung F, insbesondere während einer Kurvenfahrt, auf einer landwirtschaftlichen Fläche N ausbringt.

Das Gestänge 100 umfasst mehrere, vorzugsweise gelenkig miteinander verbundene und/oder verschwenkbare, Gestängeabschnitte 102a-102g an denen mehrere als Mehrfachdüsenkörper ausgebildete Düsenhalter 10 angeordnet sind. Jeweils ein Düsenhalter 10 weist hierbei drei Düsen 12 auf, mittels derer die Spritzflüssigkeit in Form von Sprühstrahlen und/oder Sprühfächer A ausbringbar ist. Die Düsenhalter 10, insbesondere Düsen 12, stehen mittels einer in den Darstellungen nicht gezeigten Versorgungsleitung in Fluidkommunikation. Die Spritzflüssigkeit wird den Düsenhaltern 10, insbesondere Düsen 12, in Form eines Spritzflüssigkeitskreislaufes mit einem einstellbaren Fluiddruck aus einem ebenfalls nicht gezeigten Vorratsbehälter, der mit der Versorgungsleitung fluidtechnisch verbunden ist, bereitgestellt.

Die Spritzvorrichtung umfasst außerdem eine in den Figuren nicht gezeigte und als Steuereinheit ausgebildete Steuerungs- und/oder Regelungseinrichtung die unter anderem dazu eingerichtet ist, die Düsenhalter 10, insbesondere Düsen 12, zur Ausbringung der Spritzflüssigkeit zu aktivieren und/oder anzusteuern. Ferner sind die innerhalb eines Düsenhalter 10 angeordneten Düsen 12 einzeln und/oder in Kombination ansteuerbar und/oder aktivierbar. Die Steuereinheit kann hierbei eine Geschwindigkeit und/oder Drehrate und/oder Sollausbringrate zumindest eines Düsenhalters 10, insbesondere einer Düse 12, berücksichtigen. Die Abweichung der von der Steuereinheit einstellbaren Ausbringrate zumindest eines Düsenhalters 10, insbesondere Düse 12, ist dabei zur Sollausbringrate minimal, vorzugsweise Null.

Zur optimalen Ausbringung der Spritzflüssigkeit, insbesondere während einer Kurvenfahrt, sind die Düsenhalter 10, insbesondere Düsen 12, in Abhängigkeit zumindest eines Parameters, vorzugsweise variablen, Teilbreiten zugeordnet. Die Teilbreiten sind bevorzugt durch verschiedene Geschwindigkeitsintervalle, insbesondere Geschwindigkeitsbereiche, festgelegter Größe definierbar. Eine derartige Definition der Teilbreiten ist in besonderer Weise für Kurvenfahrten, bei denen die Düsenhalter 10, insbesondere Düsen 12, entlang des Gestänges 100 unterschiedliche Bahn- und/oder Umfangsgeschwindigkeiten aufweisen, die insbesondere abhängig vom Kurvenradius sind, sinnvoll.

Alternativ oder zusätzlich werden zur Festlegung der Teilbreiten und/oder zur Aktivierung und/oder Ansteuerung der Düsenhalter 10, insbesondere Düsen 12, mehrere, vorzugsweise benachbarte, Düsenhalter 10 berücksichtigt. Hierbei sind die Sprüheigenschaften, wie beispielsweise die Ausbringrate und/oder der Sprühwinkel, der Düsenhalter 10, insbesondere Düsen 12, von entscheidender Bedeutung. In vorteilhafter Weise unterscheiden sich hierbei die jeweiligen Sprüheigenschaften zumindest teilweise der innerhalb eines Düsenhalters 10 angebrachten Düsen 12. Des Weiteren wird alternativ oder zusätzlich der an zumindest eines Düsenhalters 10, insbesondere Düse 12, anliegende Fluiddruck der Spritzflüssigkeit zur Festlegung der Teilbreiten und/oder zur Aktivierung und/oder Ansteuerung der Düsenhalter 10, insbesondere Düsen 12, erfasst und/oder berücksichtigt.

Ein besonders homogenes Ausbringergebnis der Spritzflüssigkeit auf der landwirtschaftlichen Fläche N und/oder deren Pflanzenbestand ist dadurch erreicht, dass sich die Sprühstrahlen und/oder Sprühfächer A, vorzugsweise zumindest zweier benachbarter Düsenhalter 10, insbesondere Düsen 12, wie in Fig. 1 dargestellt zumindest teilweise überlappen. Die applizierte Menge, insbesondere auf der von zumindest zwei Sprühstrahlen und/oder Sprühfächer A überlappten Fläche, entspricht hierbei der vorgegebenen Sollausbringrate, insbesondere Sollausbringmenge. Somit sind die Ausbringraten mehrere Düsenhalter, insbesondere Düsen, kombinierbar, wodurch ein besonders breites Spektrum der Ausbringmengen, insbesondere Applikationsmengen C, mittels der angebrachten Düsenhalter 10, insbesondere Düsen 12, erreicht ist.

Darüber hinaus wird alternativ oder zusätzlich die Position der einzelnen Düsenhalter 10, insbesondere Düsen 12, zur Zuordnung und/oder Festlegung der Teilbreiten berücksichtigt. Hierbei kann die Position der Spritzvorrichtung und/oder zumindest eines Düsenhalters 12, insbesondere Düse 12, mittels eines Sensors erfasst werden und/oder zusätzlich mithilfe geometrischer Informationen der Spritzvorrichtung, die vorzugsweise auf der Steuereinheit hinterlegbar ist, bestimmt werden. Ferner kann die Steuereinheit somit feststellen ob sich zumindest ein Düsenhalter 10, insbesondere Düse 12, auf einer landwirtschaftlichen Fläche N befindet und die zumindest eine Düse 12 und/oder eine Gruppe von Düsenhaltern 10, insbesondere Düsen 12, aktiviert und/oder deaktiviert werden können.

Eine Zuordnung der Düsenhalter 10, insbesondere Düsen 12, in eine, vorzugsweise variable, Teilbreite kann dabei beispielhaft gemäß Fig. 1 der Zeile B erfolgen. Jede Spalte der Zeile B repräsentiert zum einen die über der Spalte befindliche Düsengröße und/oder Kombination B von Düsen 12 und zum anderen die Breite der der jeweiligen Teilbreite. Somit sind in der ersten Teilbreite von links gesehen in den jeweiligen Düsenhaltern 10 die Düsen 12 mit der Größe 02 aktiviert, wobei somit durch die Überlappung der Sprühfächer A die entsprechende Applikationsmenge C, 02 der Spritzflüssigkeit auf der landwirtschaftlichen Fläche N erreicht ist. Zur Ausbringung der Applikationsmenge C, 03 sind innerhalb der zweiten Teilbreite von links in den Düsenhaltern abwechselnd die Düsen 12 mit der Düsengröße 02 und 04 aktiviert. Bei der dritten Teilbreite, die sich im Wesentlichen über die Gestängeabschnitte 102c-102d erstreckt, ist an den einzelnen Düsenhaltern 10 die Düse 12 mit der Düsengröße 04 aktiviert. Mit einer entlang des Gestänges abwechselnden Aktivierung von Düsenhaltern 12 mit einer einzelnen Düsengröße 04 und zweier kombinierter Düsengrößen 02 und 04 wird, wie bei der vierten Teilbreite von links gezeigt, mittels Überlappung der Sprühfächer A eine Applikationsmenge C, 05 erreicht. Bei einer fünften Teilbreite sind an allen dafür zugeordneten Düsenhaltern 10 die Düsengrößen 02 und 04 gemeinsam aktiviert, wobei somit eine Applikationsmenge C, 06 realisiert ist. Eine Applikationsmenge C, 07 ist durch eine Teilbreite mit abwechselnden aktivierten Düsenhalter 10 mit den Düsengrößen 02 mit 06 und 02 mit 04 erreicht. Innerhalb der siebten Teilbreite von links sind an den jeweiligen zugeordneten Düsenhaltern 10 die Düsengrößen 02 und 06 aktiviert, womit eine Applikationsmenge C, 08 ausbringbar ist.

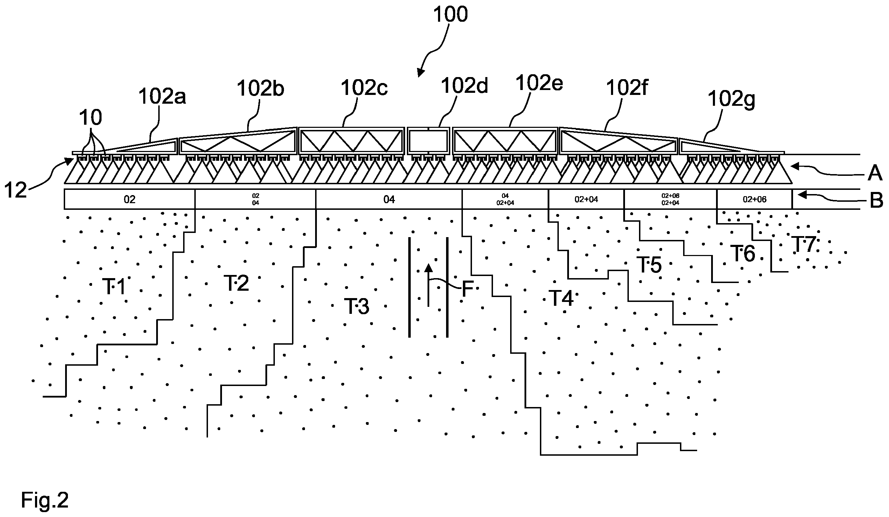

Eine zur Fig. 1 alternative oder zusätzliche Auswahl und/oder Festlegung von Teilbreiten und/oder Düsenhaltern 10, insbesondere Düsen 12, ist in der Fig. 2 gezeigt. Hierbei ist die der Spritzvorrichtung zugeordnete Steuereinheit dazu eingerichtet, die Teilbreiten, vorzugsweise variabel, anhand einer vorgegebenen Soll-Applikationsmenge, die auf einer der Steuereinheit hinterlegbaren Applikationskarte, abrufbar ist, festzulegen. Die Soll-Applikationsmengen sind hierbei teilflächenspezifisch den Teilflächen T1-T7, in die die landwirtschaftliche Fläche N unterteilbar ist, zugeordnet, wobei die Teilflächen T1-T7 jeweils unterschiedliche Soll-Applikationsmengen aufweisen.

### Bezugszeichenliste

- 10: Düsenhalter
- 100: Gestänge
- 102a-102g: Gestängeabschnitte
- 12: Düsen

- A: Sprühfächer
- B: Düsenkombination
- C: Applikationsmenge
- F: Fahrtrichtung
- N: Landwirtschaftliche Fläche
- T1-T7: Teilfläche

## Patentansprüche

1. Spritzvorrichtung, insbesondere landwirtschaftliche Feldspritze, zur Ausbringung von Wirkstoff enthaltender Spritzflüssigkeit auf einer landwirtschaftlichen Fläche (N), umfassend zumindest ein Gestänge (100), das vorzugsweise aus mehreren gelenkig miteinander verbundenen Abschnitten (102a-102g) ausgebildet ist, mehrere an dem Gestänge (100) angeordnete Düsenhalter (10), wobei ein Düsenhalter (10) zumindest eine Düse umfasst, und zumindest eine Steuereinheit die dazu eingerichtet ist, die Düsenhalter (10) in Abhängigkeit einer Geschwindigkeit und/oder Drehrate und/oder einer einstellbaren Sollausbringrate derartig zu aktivieren und/oder anzusteuern, dass jeder Düsenhalter (10), insbesondere Düse, entlang des Gestänges (100) eine Ausbringrate der Spritzflüssigkeit aufweist, deren Abweichung zur Sollausbringrate minimal, vorzugsweise Null, ist, **dadurch gekennzeichnet, dass** die Düsenhalter (10), insbesondere bei Kurvenfahrt, in Abhängigkeit zumindest eines Parameters, vorzugsweise variablen, Teilbreiten zuordenbar sind.

2. Spritzvorrichtung nach Anspruch 1, **dadurch gekennzeichnet, dass** die Teilbreiten durch zumindest zwei unterschiedliche Geschwindigkeitsintervalle festgelegter Größe definierbar sind.

3. Spritzvorrichtung nach zumindest einem der vorgenannten Ansprüche, **dadurch gekennzeichnet, dass** die Düsen (12) innerhalb eines Düsenhalters (10) einzeln und/oder in Kombination (B) aktivierbar sind, und dass die Düsenhalter (10), insbesondere Düsen (12), unter Berücksichtigung zumindest eines benachbarten Düsenhalters (10), insbesondere Düse, ansteuerbar sind.

4. Spritzvorrichtung nach zumindest einem der vorgenannten Ansprüche, **dadurch gekennzeichnet, dass** die Düsen (12) innerhalb eines Düsenhalters (10) einzeln und/oder in Kombination (B) aktivierbar sind, und dass die Düsenhalter (10), insbesondere Düsen (12), unter Berücksichtigung der Sprüheigenschaften, der zumindest einen Düse innerhalb eines Düsenhalters (10), ansteuerbar sind.

5. Spritzvorrichtung nach zumindest einem der vorgenannten Ansprüche, **dadurch gekennzeichnet, dass** sich die aktivierten Düsen (12) und/oder die Kombination (B) von aktivierten Düsen (12) innerhalb eines Düsenhalters (10), insbesondere in ihren Sprüheigenschaften, unterscheiden.

6. Spritzvorrichtung nach zumindest einem der vorgenannten Ansprüche, **dadurch gekennzeichnet, dass** die Düsenhalter (10), insbesondere Düsen (12), dazu eingerichtet sind, die Spritzflüssigkeit in Form zumindest eines Sprühstrahls und/oder Sprühfächers (A) auszubringen, und dass die Sprühstrahlen und/oder Sprühfächer (A) zumindest zweier Düsenhalter (10), insbesondere in einem Übergangsbereich zwischen zumindest zwei Teilbreiten, sich zumindest teilweise überlappen, wobei die Ausbringrate zumindest zweier sich überlappender Sprühstrahlen und/oder Sprühfächer (A) einer an die Sollausbringrate angepassten Ausbringrate entspricht.

7. Spritzvorrichtung nach zumindest einem der vorgenannten Ansprüche, **dadurch gekennzeichnet, dass** die Düsenhalter (10) den Teilbreiten gruppenweise zuordenbar sind, und das die Düsen (12) und/oder die Kombination (B) von Düsen (12) eine Ausbringrate der Spritzflüssigkeit aufweisen, deren Abweichung bei aktueller Bahngeschwindigkeit zur Sollausbringrate minimal, vorzugsweise Null, ist.

8. Spritzvorrichtung nach zumindest einem der vorgenannten Ansprüche, **dadurch gekennzeichnet, dass** die Düsen (12) innerhalb eines Düsenhalters (10) einzeln und/oder in Kombination (B) aktivierbar sind, und dass die Düsenhalter (10), insbesondere Düsen (12), vorzugsweise gruppenweise und/oder innerhalb einer variablen Teilbreite, unter Berücksichtigung der Position des zumindest einen Düsenhalters (10), ansteuerbar sind.

9. Spritzvorrichtung nach zumindest einem der vorgenannten Ansprüche, **dadurch gekennzeichnet, dass** die Düsen (12) innerhalb eines Düsenhalters (10) einzeln und/oder in Kombination (B) aktivierbar sind, und dass die Düsenhalter (10), insbesondere Düsen (12), vorzugsweise gruppenweise und/oder innerhalb einer variablen Teilbreite, unter Berücksichtigung einer Soll-Applikationsmenge die, insbesondere teilflächenspezifisch, auf einer der Spritzvorrichtung zugeordneten Steuereinheit hinterlegbar und/oder abrufbar ist, ansteuerbar sind.

10. Spritzvorrichtung nach zumindest einem der vorgenannten Ansprüche, mit zumindest einem Spritzflüssigkeitskreislauf der den Düsenhaltern (10), insbesondere Düsen (12), zugeordnet ist, **dadurch gekennzeichnet, dass** die Düsen (12) innerhalb eines Düsenhalters (10) einzeln und/oder in Kombination (B) aktivierbar sind, und dass die Düsenhalter (10), insbesondere Düsen (12), unter Berücksichtigung zumindest eines Fluiddrucks innerhalb des zumindest einen Spritzflüssigkeitskreislaufes, ansteuerbar sind.

11. Verfahren zum Betreiben einer Spritzvorrichtung, insbesondere landwirtschaftlichen Feldspritze, die vorzugsweise nach zumindest einem der vorgenannten Ansprüche ausgebildet ist, mit den Schritten:
- Aktivieren und/oder ansteuern wenigstens eines Düsenhalters (10), insbesondere Düse, mittels Steuersignalen einer Steuereinheit in Abhängigkeit einer Geschwindigkeit und/oder Drehrate und/oder einer einstellbaren Sollausbringrate;
- Applizieren von Spritzflüssigkeit mit den angesteuerten Düsenhaltern (10), insbesondere Düsen (12), auf zumindest eine Teilfläche (T1-T7);
**dadurch gekennzeichnet, dass** die Düsenhalter (10), insbesondere bei Kurvenfahrt, in Abhängigkeit zumindest eines Parameters, vorzugsweise variablen, Teilbreiten zugeordnet werden.

12. Verfahren nach Anspruch 11, **dadurch gekennzeichnet, dass** das Aktivieren und/oder Ansteuern zumindest eines Düsenhalters (10), insbesondere Düse, unter Berücksichtigung zumindest einer der folgenden Parameter erfolgt:
- Bahngeschwindigkeit des Düsenhalters (10), insbesondere Düse; und/oder
- Sprüheigenschaften der Düsen (12) innerhalb des Düsenhalters (10); und/oder
- Sprüheigenschaften und/oder Ausbringrate zumindest eines benachbarten Düsenhalters (10), insbesondere zumindest einer Düse innerhalb des benachbarten Düsenhalters (10); und/oder
- Position des Düsenhalters (10); und/oder
- Soll-Applikationsmenge zumindest einer Teilfläche (T1-T7), wobei die Soll- Applikationsmenge auf einer der Spritzvorrichtung zugeordneten Steuereinheit hinterlegt und/oder abrufbar ist; und/oder
- Fluiddruck der Spritzflüssigkeit innerhalb eines Spritzflüssigkeitskreislaufes der den Düsenhaltern (10) zugeordnet ist.
